# EUROPEAN PATENT SPECIFICATION

(11) **EP 0 507 777 B1**
(45) Date of publication and mention of the grant of the patent: **05.10.1994**
(21) Application number: 90916399.0
(22) Date of filing: 23.10.1990
(51) Int. Cl.: B01D 53/02

(54) **A METHOD OF PURIFYING AIR FROM COMBUSTIBLE POLLUTANTS AND AN APPARATUS FOR PERFORMING THE METHOD**
VERFAHREN ZUR ENTFERNUNG VON BRENNBAREN VERUNREINIGUNGEN AUS LUFT UND EINRICHTUNG ZUR DURCHFÜHRUNG DES VERFAHRENS
PROCEDE DE PURIFICATION D'UN AIR POLLUE PAR DES POLLUANTS COMBUSTIBLES ET APPAREIL DE REALISATION DE CE PROCEDE

(30) Priority: 26.10.1989 SE 8903556
(43) Date of publication of application: 14.10.1992
(73) Proprietor: HEED, Björn, S-412 61 Göteborg (SE)
(72) Inventor: HEED, Björn, S-412 61 Göteborg (SE)
(74) Representative: Lindberg, Klas Valter Bo
(86) International application number: SE9000685
(87) International publication number: WO9106361

(56) References cited:
- SE-B- 419 174
- SE-B- 441 623

## Description

The present invention concerns a method of purifying air from combustible pollutants and an apparatus for performing said method.

In cleaning air from combustible impurities, such as solvents present in the ventilating air emitted from painting or printing works, an old and well-known method is to burn the impurities by heating the air up to a suitable temperature of reaction. However, such combustion consumes energy for the heating purposes. One method of reducing the energy that is required for this purpose is to utilize a regenerative combustion technique, preferably with the aid of an apparatus known as a "combustion exchanger", that is an apparatus comprising an air-pervious, heat-accumulating bed which may be heated up to the spontaneous combustion temperature of the impurities and in which bed the combustible impurities, by reversing their direction of flow, contribute to sustaining the spontaneous combustion temperature inside the bed. An apparatus of this kind is described e.g. in US-A-4,741,690.

SE-B-4 19 174 discloses a method of purifying air from combustible pollutants, which method comprises forcing the air to be treated through a heat-regenerative adsorption body which is arranged to adsorb said pollutants and to allow passage-through of purified air, and, for regeneration of said adsorption body at intervals, circulating a flow of gas laden with the pollutants adsorbed by the body through this body and routing it to a combustion device for complete combustion therein of the pollutants and an apparatus for performing this method comprising a heat-regenerative adsorption body which is designed to absorb said combustible pollutants, and a combustion device for complete combustion of the pollutants.

When the contents of pollutants in the air are comparatively normal the combustion heat generated during the reaction is sufficient to supply the necessary thermal energy. When the contents are very low, which they may be in large ventilation systems, supplementary energy in the form of fuel or electricity must however be added. If large air flows are involved the required amount of energy may be considerable and consequently the operational costs may become very high.

In case of such low concentrations it may be preferable to use some kind of absorption technique. This involves passing the polluted air through a layer of an absorbing material, such as carbon, zeolites or an absorbing polymer material. A disadvantage connected with these methods is however, that the absorbed pollutants must be resorbed and be driven off the absorption material with the aid of heat. Consequently all of the absorption material must be heated and warm nitrogen gas or other regeneration gas (frequently steam) must be added. Also in this case the required energy amounts may be comparatively large and the impurities in the regeneration gas must be treated in a separate system. The main purpose of the subject invention is to eliminate the disadvantages inherent in the purification methods outlined in the aforegoing and to provide an installation which may be used for cleaning of air wherein the contents of pollutants are very low, and which requires addition of only very small amounts of energy.

In accordance with the invention this purpose is achieved starting from the method according to SE-B-4 19 174 by connecting said adsorption body to the channelling system of said combustion device and supplying air, rich in oxygen, during said regeneration phase, and forcing said air to flow in a reverse direction through said combustion device together with the pollutant-laden air from the adsorption body so as to establish a circuit of circulation through said combustion device and said adsorption body, said combustion device being of a kind known as a "combustion exchanger" i.e. a device comprising an air-pervious, heat-accumulating bed which may be heated to the temperature of spontaneous combustion of the pollutants and in which bed the combustible pollutants contribute to sustaining the spontaneous combustion temperature in the bed by reversal of their direction of flow.

In accordance with the teachings of the invention the two air purifying systems mentioned initially thus have been combined, i.e. the energy-saving collection of the pollutants in an adsorption bed is combined with the feature of making use of the reaction heat generated in a combustion exchanger for the purpose of regenerating the adsorption bed.

The invention also concerns an apparatus for carrying out the method. Starting from the apparatus as disclosed in SE-B-4 19 174 it is characterized in that said combustion device is a device known as a "combustion exchanger", i.e. a device containing a heat-accumulating, air-pervious bed which may be heated to the temperature of spontaneous combustion of said pollutants, in which bed the combustible pollutants, by reversing their direction of flow, contribute to sustaining the temperature of spontaneous combustion inside the bed, and in that said apparatus also comprises devices for maintaining communication between the adsorption bed and the combustion exchanger for the purpose of regenerating the adsorption bed, as well as inlets for admission of air, rich in oxygen, into the regeneration circuit.

One embodiment of the invention will be described in the following with reference to the accompanying drawing, in which:
FIG. 1 illustrates an air-purification system incorporating, in accordance with the invention, a channelling system including an adsorption body and a combustion exchanger connected to said channeling system, and
FIG. 2 illustrates an adsorption body combined with a filter.

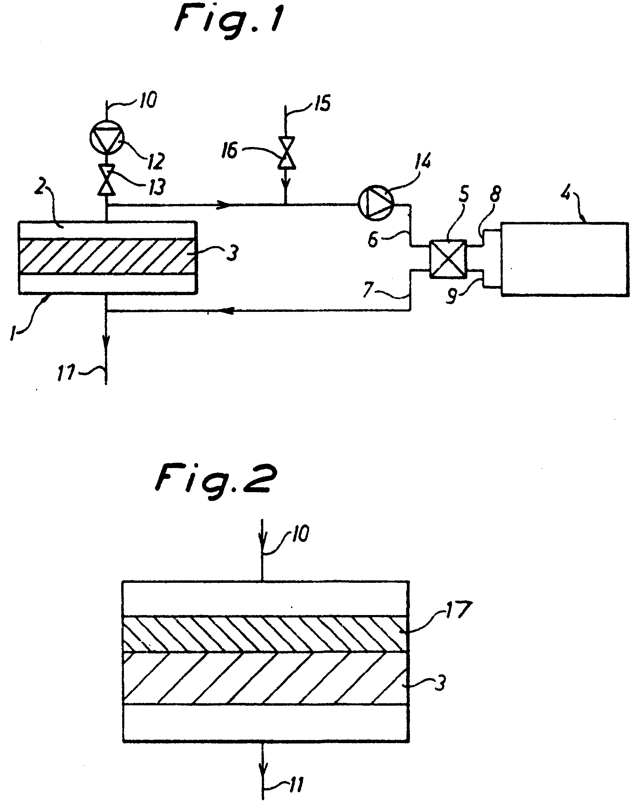

In Fig. 1 reference numeral 1 designates a cleaning installation generally, in which an adsorption body 3 is positioned inside a housing 2. Numeral reference 4 designates a "combustion exchanger" generally. By "combustion exchanger" should be understood an apparatus comprising an air-pervious, heat-accumulating bed which may be heated to the spontaneous combustion temperature of the pollutants and in which bed the combustible pollutants, owing to the reversal of their direction of flow, contribute to sustaining the spontaneous combustion temperature inside the bed. A device of this kind is described in US-A-4,741,690 and therefore does not need to be described in closer detail herein. By numeral reference 5 is designated a reversing valve which is designed to alternatingly communicate the two conduits 6 and 7 into communication with the conduits 8 and 9, respectively incorporated in the combustion exchanger in order to thus reverse the flow of direction through the reaction bed included in the combustion exchanger.

Reference numeral 10 designates the inlet conduit through which polluted air to be treated flows into the installation, and by numeral 11 is designated the outlet conduit through which treated air leaves the installation. By reference numeral 12 is designated a fan or similar means and by 13 a valve included in the conduit 10. Conduit 6 leading to the combustion exchanger is branched off from conduit 10 on the inlet side of the absorption installation 1 and the conduit 7 leading from the combustion exchanger debouches into the outlet conduit 11 on the outlet side of the adsorption device. By reference numeral 14 is designated a circulation fan included in the conduit circuit 6, 7. By 15 is designated a supply line for intake of air, rich in oxygen, in order to improve the combustion in the combustion exchanger 4. A valve 16 is inserted in the air supply line 15. In Fig. 2 the adsorption body is designated by numeral reference 3 like in the preceding drawing figure. However, in accordance with the embodiment illustrated in Fig. 2 the adsorption body is supplemented by a filter body 17 which is positioned on the inlet side and which is designed to trap dust particles from the air to be treated entering through the inlet channel 10.

During normal operational conditions the installation functions in the following manner: The polluted air is propelled by a fan 12 through the adsorbing material 3 in which the polluted material is trapped while the treated, cleaned air exits through the outlet channel 11. In order to increase the flow capacity, the combustion exchanger 4 may be operated simultaneously without departing from the inventive idea, be operated simultaneously, in which case part of the air passes through the exchanger via the channels 6 and 7 and consequently this air flow, too, is cleaned. Owing to the connection of the combustion exchanger 4 in parallel with the regular cleaning system, the absorption device 1 need not be dimensioned for maximum capacity conditions, since peak loads may be handled by the combustion exchanger. In the treatment of pollutants which are low in energy it is, however, preferable to pass the entire flow through the absorption device 1 when the capacity thereof is sufficient.

The installation may be run in this manner until the adsorbing bed 3 becomes too saturated to clean the air efficiently. At this stage, the bed must be regenerated. Preferably, this is affected at intervals, such as once every 24 hours, preferably at night, or once a week, depending on the contents in pollutants, on the air flow, and on the size of the bed.

For the purposes of regeneration clean air is forced to flow in a reverse flow from the combustion exchanger 4 via the channel 7 and through the adsorption medium 3, where it picks up pollutants which, in a highly concentrated form, together with the air flow via the channel 6 into the combustion exchanger 4, wherein it is cleaned in order to be recirculated repeatedly by passing through the absorption bed. When the air passes through the combustion exchanger it is heated by the reaction bed of the combustion exchanger. The circulating air and also the adsorption bed 3 thus are heated successively which facilitates the regeneration process. For the supply of oxygen required for the combustion and in order to adjust the temperature, some of the circulating air is replaced by fresh air through intake of air via the valve 16 while the corresponding amount is exhausted through the regular outlet channel 11.

In this manner, regeneration of the adsorption bed 3 and destruction of the pollutants are effected simultaneously at low energy consumption levels. An advantageous feature of the invention is the ability of the combustion exchanger to operate economically without supply of supplementary fuel, also when the contents of pollutants are comparatively low, which is due to the concentration of combustible pollutants that is obtained during the regenerative circulation. A central feature of the invention is that combustion inside the combustion exchanger may be effected economically, also when the contents of pollutants in the circulating regeneration air are low, with the result that the temperature of the latter may be maintained at a comparatively low temperature. The low concentration and the low temperature reduce the fire hazards and make it unnecessary to use inert gases or steam to effect the regeneration, which otherwise is customary in the regeneration of absorption beds and which is mainly responsible for the high investment and operational costs.

When one wishes to operate the purifying equipment continuously, it may be fitted with two or more adsorption beds, one bed being regenerated with the aid of the combustion exchanger part whereas the other one purifies the air.

In some cases the polluted air is laden with dust particles which tend to adhere to the adsorption material and not to be loosen therefrom during the regeneration phase. In order to prevent such particles from passing throught the adsorption material, the adsorption bed may be supplemented with a filter body 17 positioned on the inlet side, as appears from Fig. 2. The filter body 17 could be a layer of filter material, such as paper, rockwool, wood fiber or similar material which is deposited on top of the absorption bed 3. Preferably, the filter layer is exchangeable and may be replaced by fresh material when the old one is too laden by particles. By using a cheap filter material it is thus possible to prolong the useful and servicable life of the more expensive adsorption material.

In order to prevent interruption of the cleaning operation upon reversals of the flow directions through the combustion exchanger and also to prevent air from being admitted to the atmosphere in non-purified condition while the change-over takes place, the valve 16 may be made to close for some seconds in connection with this change of direction. The entire uncleaned volume of air is then recirculated to the combustion exchanger, whereby the overall cleaning level is raised.

## Claims

1. A method of purifying air from combustible pollutants, which method comprises forcing the air to be treated through a heat-regenerative adsorption body (3) which is arranged to adsorb said pollutants and to allow passage-through of purified air, and, for regeneration of said adsorption body at intervals, circulating a flow of gas laden with the pollutants adsorbed by the body (3) through this body (3) and routing it to a combustion device for complete combustion therein of the pollutants, **characterized** by connecting said adsorption body (3), to the channelling system of said combustion device (4) and supplying air, rich in oxygen, during said regeneration phase, and forcing said air to flow in a reverse direction through said combustion device together with the pollutant-laden air from the adsorption body (3) so as to establish a circuit of circulation (6, 4, 7, 1) through said combustion device (4) and said adsorption body (3), said combustion device (4) being of a kind known as a "combustion exchanger" i.e. a device comprising an air-pervious, heat-accumulating bed which may be heated to the temperature of spontaneous combustion of the pollutants and in which bed the combustible pollutants contribute to sustaining the spontaneous combustion temperature in the bed by reversal of their direction of flow.

2. A method as claimed in claim 1, **characterized** in that the supply to the adsorption body (3) of air to be purified is interrupted during the regenerating phase.

3. A method as claimed in claim 2, **characterized** in that a plurality of adsorption bodies (3) interconnected in parallel, are inserted in the system in mutually parallel channelling systems, and in that said bodies (3) are alternatingly regenerated in such a manner that the system is capable of non-interrupted through-flow and purification of polluted air.

4. A method as claimed in any one of the preceding claims, **characterized** in that the regenerating flow is guided in counter-current flow with the regular flow of air through the adsorption filter (3).

5. An apparatus for performing the method as claimed in claim 1, comprising a heat-regenerative adsorption body (3) which is designed to absorb said combustible pollutants, and a combustion device (4) for complete combustion of the pollutants, **characterized** in that said combustion device (4) is a device known as a "combustion exchanger" (4), i.e. a device containing a heat-accumulating, air-pervious bed which may be heated to the temperature of spontaneous combustion of said pollutants, in which bed the combustible pollutants, by reversing their direction of flow, contribute to sustaining the temperature of spontaneous combustion inside the bed, and in that said apparatus also comprises devices for maintaining communication between the adsorption bed and the combustion exchanger for the purpose of regenerating the adsorption bed, as well as inlets (15) for admission of air, rich in oxygen, into the regeneration circuit (6, 4, 7, 1).

6. An apparatus as claimed in claim 5, **characterized** in that it comprises a circulation fan (14) controlling the direction of flow inside the regenerating ciruit in counter-current flow to the regular through-flow direction through the adsorption body (3), i.e. in the course of the regular purification phase.

7. An apparatus as claimed in any one of claim 5 or 6, **characterized** in that a valve (13) is provided for interrupting the regular through-flow through the absorption filter (3) during the regeneration phase.

8. An apparatus as claimed in any one of claims 5-7, **characterized** in that the adsorption filter (3) is combined with a replaceable dust-separation filter (16).

9. An apparatus as claimed in claim 5, **characterized** in that a valve (16) is provided to close said inlets that admit air, rich in oxygen, during the change of flow direction through the combustion exchanger (4).

10. An apparatus as claimed in any one of claims 5-9, **characterized** in that it comprises at least two adsorption bodies (3) inserted in parallel systems, and means for alternatingly incorporating said adsorption bodies into the regenerating circuit (6, 4, 7, 1).

## Patentansprüche

1. Verfahren zur Reinigung von Luft von verbrennbaren Verunreinigungen, wobei das Verfahren umfaßt, daß die zu behandelnde Luft durch einen wärme-regenerativen Adsorptionskörper (3) durchgezwängt wird, der angeordnet ist, um die Verunreinigungen zu adsorbieren und Durchgang von gereinigter Luft zuzulassen, und daß man zur Regeneration des Adsorptionskörpers von Zeit zu Zeit einen Gasstrom, voll mit den durch den Körper (3) adsorbierten Verunreinigungen, durch diesen Körper (3) zirkuliert und daß er zu einer Verbrennungsvorrichtung für vollständige Verbrennung der Verunreinigungen in der Verbrennungsvorrichtung weitergeleitet wird, dadurch gekennzeichnet, daß der Adsorptionskörper (3) mit dem Kanalsystem der Verbrennungsvorrichtung (4) verbunden wird und während der Regenerationsphase an Sauerstoff reiche Luft zugeführt wird und erzwungen wird, daß die Luft in einer Rückwärtsrichtung durch die Verbrennungsvorrichtung zusammen mit der mit Verunreinigungen vollen Luft von dem Adsorptionskörper (3) fließt, so daß ein Zirkulationskreislauf (6, 5, 7, 1) durch die Verbrennungsvorrichtung (4) und den Adsorptionskörper (3) eingerichtet wird, wobei die Verbrennungsvorrichtung (4) von einer Art ist, die als ein "Verbrennungs-Austauscher" bekannt ist, d. h. eine Vorrichtung, die ein luftdurchlässiges, wärmespeicherndes Bett umfaßt, das auf die Temperatur der spontanen Verbrennung der Verunreinigungen erhitzt werden kann, und wobei in dem Bett die verbrennbaren Verunreinigungen durch Umkehr ihrer Flußrichtung zur Aufrechterhaltung der Temperatur der spontanen Verbrennung in dem Bett beitragen.

2. Verfahren nach Anspruch 1, dadurch gekennzeichnet, daß die Zufuhr von zu reinigender Luft zu dem Adsorptionskörper (3) während der Regenerationsphase unterbrochen wird.

3. Verfahren nach Anspruch 2, dadurch gekennzeichnet, daß eine Vielzahl von parallel verbundenen Adsorptionskörpern (3) in das System in zueinander parallelen Kanalsystemen eingefügt wird und daß die Körper (3) abwechselnd in solch einer Weise regeneriert werden, daß das System zu ununterbrochenem Durchfluß und ununterbrochener Reinigung der verunreinigten Luft fähig ist.

4. Verfahren nach einem der vorhergehenden Ansprüche, dadurch gekennzeichnet, daß der regenerierende Fluß in gegenströmigem Fluß mit dem regulären Luftfluß durch den Adsorptionsfilter (3) geführt wird.

5. Vorrichtung zur Ausführung des Verfahrens nach Anspruch 1, umfassend einen wärme-regenerativen Adsorptionskörper (3), der aufgebaut ist, um die verbrennbaren Verunreinigungen zu absorbieren, und eine Verbrennungsvorrichtung (4) für vollständige Verbrennung der Verunreinigungen, dadurch gekennzeichnet, daß die Verbrennungsvorrichtung (4) eine Vorrichtung ist, die als ein "Verbrennungs-Austauscher" (4) bekannt ist, d. h. eine Vorrichtung, die ein wärmespeicherndes, luftdurchlässiges Bett enthält, das auf die Temperatur der spontanen Verbrennung der Verunreinigungen erhitzt werden kann, wobei in dem Bett die verbrennbaren Verunreinigungen durch Umkehr ihrer Flußrichtung zur Aufrechterhaltung der Temperatur der spontanen Verbrennung innerhalb des Betts beitragen, und daß die Vorrichtung auch Vorrichtungen zur Aufrechterhaltung der Verbindung zwischen dem Adsorptionsbett und dem Verbrennungsaustauscher für den Zweck der Regenerierung des Adsorptionsbetts umfaßt, ebenso wie Eintrittsöffnungen (15) für den Zutritt von an Sauerstoff reicher Luft in den Regenerationskreis (6, 4, 7, 1).

6. Vorrichtung nach Anspruch 5, dadurch gekennzeichnet, daß es ein Zirkulationsgebläse (14) umfaßt, das die Stromrichtung innerhalb des Regenerations-Kreises zu gegenströmigem Fluß zu der regulären Durchflußrichtung durch den Adsorptionskörper (3) steuert, d. h. im Verlauf der regulären Reinigungsphase.

7. Vorrichtung nach einem der Ansprüche 5 oder 6, dadurch gekennzeichnet, daß ein Ventil (13) bereitgestellt ist, um den regulären Durchfluß durch den Adsorptionsfilter (3) während der Regenerationsphase zu unterbrechen.

8. Vorrichtung nach einem der Ansprüche 5 bis 7, dadurch gekennzeichnet, daß der Adsorptionsfilter (3) mit einem ersetzbaren Staubabscheidungs-Filter (16) kombiniert ist.

9. Vorrichtung nach Anspruch 5, dadurch gekennzeichnet, daß ein Ventil (16) bereitgestellt ist, um während der Veränderung der Flußrichtung durch den Verbrennungs-Austauscher (4) die Eintrittsöffnungen, die an Sauerstoff reiche Luft einlassen, zu schließen.

10. Vorrichtung nach einem der Ansprüche 5 bis 9, dadurch gekennzeichnet, daß sie mindestens zwei Adsorptionskörper (3), die in parallelen Systemen eingefügt sind, und Einrichtungen, um abwechselnd die Adsorptionskörper an den Regenerationskreis (6, 4, 7, 1) anzugliedern, umfaßt.

## Revendications

1. Procédé de purification d'un air pollué par des polluants combustibles, lequel procédé comprend le passage forcé de l'air à traiter à travers un corps d'adsorption pouvant être régénéré thermiquement (3) qui est disposé pour adsorber lesdits polluants et pour permettre le passage (en son travers) de l'air purifié, et, pour la régénération dudit corps d'adsorption à intervalles, la circulation d'un écoulement de gaz chargé des polluants adsorbés par le corps (3) à travers ce corps (3) et son acheminement vers un dispositif de combustion pour une combustion complète des polluants à l'intérieur de celui-ci, caractérisé par la connexion dudit corps d'adsorption (3) au système de canalisation dudit dispositif de combustion (4) et par l'introduction d'air, riche en oxygène, pendant ladite phase de régénération, et par la contrainte dudit air de s'écouler en direction inverse à travers ledit dispositif de combustion avec l'air chargé en polluants provenant du corps d'adsorption (3) afin d'établir un circuit de circulation (6, 4, 7, 1) à travers ledit dispositif de combustion (4) et ledit corps d'adsorption (3), ledit dispositif de combustion (4) étant d'un type connu comme étant un "échangeur à combustion" c'est-à-dire un dispositif comprenant un lit accumulant de la chaleur, perméable à l'air qui peut être chauffé à la température de combustion spontanée des polluants et dans lequel lit les polluants combustibles contribuent à maintenir la température de combustion spontanée dans le lit par inversion de leur direction d'écoulement.

2. Procédé selon la revendication 1, caractérisé en ce que l'introduction dans le corps d'adsorption (3) de l'air à purifier est interrompue pendant la phase de régénération.

3. Procédé selon la revendication 2, caractérisé en ce que plusieurs corps d'adsorption (3) interconnectés en parallèle, sont insérés dans le système selon des systèmes de canalisation mutuellement parallèles, et en ce que lesdits corps (3) sont régénérés en alternance de manière que le système soit capable d'être traversé de façon ininterrompue par l'air pollué et de purifier ce dernier.

4. Procédé selon l'une quelconque des revendications précédentes, caractérisé en ce que l'écoulement de régénération est guidé à contre-courant avec l'écoulement régulier d'air à travers le filtre d'adsorption (3).

5. Appareil pour mettre en oeuvre le procédé selon la revendication 1, comprenant un corps d'adsorption pouvant être régénéré thermiquement (3) qui est conçu pour adsorber lesdits polluants combustibles, et un dispositif de combustion (4) pour une combustion complète des polluants, caractérisé en ce que ledit dispositif de combustion (4) est un dispositif connu en tant qu'un "échangeur à combustion" (4), c'est-à-dire un dispositif contenant un lit perméable à l'air accumulant de la chaleur qui peut être chauffé à la température de combustion spontanée desdits polluants, dans lequel lit les polluants combustibles contribuent à maintenir la température de combustion spontanée à l'intérieur du lit, en inversant leur direction d'écoulement, et en ce que ledit appareil comprend aussi des dispositifs pour maintenir la communication entre le lit d'adsorption et l'échangeur à combustion dans le but de régénérer le lit d'adsorption, aussi bien que des entrées (15) pour admettre de l'air riche en oxygène dans le circuit de régénération (6, 4, 7, 1).

6. Appareil selon la revendication 5, caractérisé en ce qu'il comprend une soufflante de circulation (14) contrôlant la direction d'écoulement à l'intérieur du circuit de régénération à contre-courant de la direction de passage régulière à travers le corps d'adsorption (3), c'est-à-dire au cours de la phase de purification régulière.

7. Appareil selon l'une quelconque des revendications 5 ou 6, caractérisé en ce qu'une vanne (13) permet d'interrompre le passage régulier à travers le filtre d'adsorption (3) pendant la phase de régénération.

8. Appareil selon l'une quelconque des revendications 5 à 7, caractérisé en ce que le filtre d'adsorption (3) est associé à un filtre de séparation de poussière remplaçable (16).

9. Appareil selon la revendication 5, caractérisé en ce qu'une vanne (16) permet de fermer lesdites entrées qui admettent l'air, riche en oxygène, pendant le changement de direction d'écoulement à travers l'échangeur à combustion (4).

10. Appareil selon l'une quelconque des revendications 5 à 9, caractérisé en qu'il comprend au moins deux corps d'adsorption (3) insérés selon des systèmes parallèles, et un moyen pour incorporer en alternance lesdits corps d'adsorption dans le circuit de régénération (6, 4, 7, 1).
